## Europäisches Patentamt

## European Patent Office

## Office européen des brevets

(19)

(11) **EP 0 908 474 B1**

(12) **FASCICULE DE BREVET EUROPEEN**

(45) Date de publication et mention
de la délivrance du brevet:
**13.11.2002 Bulletin 2002/46**

(51) Int Cl.⁷: **C08F 10/02**, C08F 297/08,
C08F 4/655, C08F 4/22

(21) Numéro de dépôt: **98124379.3**

(22) Date de dépôt: **16.04.1996**

(54) **Procédé de polymérisation d'oléfines**

Verfahren zur Olefinpolymerisation

Process for the polymerization of olefins

(84) Etats contractants désignés:
**AT BE DE ES FI FR GB IT NL PT SE**

(30) Priorité: **28.04.1995 BE 9500397**

(43) Date de publication de la demande:
**14.04.1999 Bulletin 1999/15**

(62) Numéro(s) de document de la (des) demande(s)
initiale(s) en application de l'article 76 CBE:
**96201016.1 / 0 739 909**

(73) Titulaire: **SOLVAY POLYOLEFINS EUROPE -
BELGIUM (Société Anonyme)
1050 Bruxelles (BE)**

(72) Inventeurs:
• **Breulet, Jacques
1970 Wezembeek-Oppem (BE)**

• **Koch, Benoît
4280 Hannut (BE)**
• **Promel, Michel
1120 Bruxelles (BE)**
• **Bian, Jiang
1200 Bruxelles (BE)**
• **Lhost, Olivier
7020 Maisieres (BE)**

(74) Mandataire: **Destryker, Elise Martine et al
Solvay Polyolefins Europe-Belgium
(Société Anonyme)
Département de la Propriété Industrielle
310, rue de Ransbeek
1120 Bruxelles (BE)**

(56) Documents cités:
EP-A- 0 100 843        EP-A- 0 134 427
EP-A- 0 273 284        EP-A- 0 572 003
EP-A- 0 603 935        US-A- 5 260 384

**Description**

La présente invention concerne un procédé de polymérisation d'oléfines qui permet notamment de fabriquer des polymères d'éthylène présentant une combinaison avantageuse de caractéristiques qui les rend particulièrement adaptés à la mise en oeuvre par extrusion et par extrusion soufflage en vue de la fabrication d'articles (par exemple de tuyaux) présentant d'excellentes propriétés mécaniques et notamment une résistance élevée à la fissuration sous contrainte.

Il est généralement connu que des résines présentant une viscosité élongationnelle élevée (ce qui se traduit par un taux de gonflement élevé) se prêtent particulièrement bien à la mise en oeuvre par extrusion et par extrusion soufflage. Par exemple, le brevet belge BE 840378 (SOLVAY & CIE) décrit des polyéthylènes obtenus par polymérisation dans un seul réacteur en présence d'un solide catalytique qui est préparé en faisant réagir un composé oxygéné organique de magnésium avec un composé oxygéné organique de titane et un composé oxygéné organique de zirconium, et en traitant ensuite le produit de réaction ainsi obtenu avec un halogénure d'aluminium. Les polyéthylènes connus présentent un taux de gonflement élevé. Toutefois, leurs propriétés mécaniques sont telles que la résistance à la fissuration sous contrainte des tuyaux extrudés à partir de ces polyéthylènes est faible.

Par ailleurs, des polyéthylènes de propriétés mécaniques améliorées et en particulier de résistance élevée à la fissuration sous contrainte, sont connus. Par exemple, la demande de brevet EP 603935 (SOLVAY) divulgue des polymères d'éthylène obtenus par polymérisation dans au moins deux réacteurs en série en présence d'un catalyseur au titane. Les polymères d'éthylène ainsi obtenus présentent de bonnes propriétés mécaniques (résistance élevée à la fissuration sous contrainte). Cependant, les polymères d'éthylène présentent un faible taux de gonflement.

La présente invention vise à remédier aux inconvénients précités en fournissant un polymère d'éthylène nouveau présentant à la fois un taux de gonflement élevé et une résistance élevée à la fissuration sous contrainte, qui convient particulièrement bien à la mise en oeuvre par extrusion et par extrusion soufflage.

En conséquence, l'invention concerne un polymère d'éthylène présentant un taux de gonflement ($T_G$) d'au moins 1,4, une résistance à la fissuration sous contrainte (ESCR) d'au moins 55 h et un indice de fluidité ($MI_5$) d'au moins 0,2 g/10 min.

Une des caractéristiques essentielles du polymère d'éthylène selon l'invention réside donc dans la combinaison d'un taux de gonflement élevé avec une résistance élevée à la fissuration sous contrainte.

Le taux de gonflement du polymère d'éthylène selon l'invention est mesuré en extrudant, à 190°C et à un gradient de vitesse de 100 s$^{-1}$, le polymère d'éthylène au travers d'une filière d'une longueur de 30 mm et d'un diamètre de 2 mm et à une vitesse d'extrusion constante, et en mesurant le déplacement du piston nécessaire pour extruder une longueur de jonc de 70 mm. Le taux de gonflement est défini par la relation $T_G = 0,5707 \sqrt{e}$, dans laquelle e représente le déplacement du piston exprimé en mm. Le cylindre et le piston du rhéomètre utilisé pour cette mesure répondent aux critères de celui utilisé pour la mesure de l'indice de fluidité selon la norme ASTM D1238 (1986).

La résistance à la fissuration sous contrainte du polymère d'éthylène est mesurée selon le mode opératoire suivant. Dix plaques de dimensions 125 mm x 12,7 mm x 3,2 mm sont pressées à partir d'une feuille en polymère d'éthylène. Deux entailles y sont apportées, la première à 60 mm d'un bout de la plaque et la deuxième à 15 mm de l'autre bout de la plaque. Les plaques entaillées sont soumises à une force de flexion constante de 7,36 N, correspondant à une contrainte inférieure à la contrainte au seuil d'écoulement plastique, et immergées simultanément dans une solution tensio-active comprenant 3 ml de nonylphénoxy-poly(éthylèneoxy)éthanol par litre d'eau à la température de 60°C. Le temps à l'issue duquel les éprouvettes se rompent est relevé et le temps moyen correspondant à la rupture de 50 % des éprouvettes est calculé.

Aux fins de la présente invention, on entend désigner par "polymères d'éthylène" les homopolymères d'éthylène ainsi que les copolymères d'éthylène avec au moins un comonomère. Les copolymères d'éthylène sont les plus avantageux. On peut citer à titre de comonomère, les alpha-oléfines contenant de 3 à 8 atomes de carbone. Le butène, l'hexène et leurs mélanges sont préférés. La teneur en comonomère dans le polymère d'éthylène est généralement d'au moins 0,1 % en poids, en particulier d'au moins 0,5 % en poids, les valeurs d'au moins 1 % en poids étant favorables. La teneur en comonomère est habituellement d'au plus 10 % en poids, plus précisément d'au plus 8 % en poids, les valeurs d'au plus 5 % en poids étant les plus courantes.

Les polymères d'éthylène selon l'invention présentent habituellement un indice de fluidité mesuré à 190°C sous une charge de 5 kg selon la norme ASTM D 1238 - Condition P (1986) (appelé ci-après $MI_5$) d'au moins 0,3 g/10 min, en particulier d'au moins 0,6 g/10 min. Le $MI_5$ ne dépasse pas en général, 10 g/10 min, le plus souvent pas 5 g/10 min, et plus spécialement pas 2 g/10 min.

Des polymères d'éthylène selon l'invention qui sont préférés sont en outre caractérisés par une viscosité dynamique η exprimée en dPa.s et mesurée à un gradient de vitesse de 100 s$^{-1}$ à 190°C telle que le rapport

$$\frac{\log (177470/MI_5) - \log \eta}{2 - \log (2,53 \times MI_5)}$$

soit d'au moins 0,55. De préférence, ce rapport est d'au moins 0,59, les valeurs d'au moins 0,61 étant particulièrement avantageuses. Dans la plupart des cas, ce rapport est d'au plus 0,73, et le plus souvent d'au plus 0,70.

Les polymères d'éthylène selon l'invention présentent couramment une masse volumique standard (ou densité) mesuré selon la norme ISO 1183 (1987) d'au moins 945 kg/m$^3$, en particulier d'au moins 950 kg/m$^3$, les valeurs d'au moins 952 kg/m$^3$ étant préférées. La masse volumique standard ne dépasse pas, en général, 965 kg/m$^3$, plus précisément pas 960 kg/m$^3$, les valeurs d'au plus 958 kg/m$^3$ étant les plus préférées.

L'invention concerne aussi divers procédés de préparation du polymère d'éthylène décrit ci-dessus.

Dans un premier procédé de préparation de polymère d'éthylène selon l'invention on met en oeuvre un seul solide catalytique contenant du titane et du zirconium à titre d'éléments actifs dans une polymérisation en deux réacteurs disposés en série.

Le premier procédé de préparation consiste plus particulièrement à polymériser l'éthylène éventuellement avec un ou plusieurs comonomères dans deux réacteurs en série en présence d'un solide catalytique comprenant du titane et du zirconium dans un rapport molaire Zr/Ti d'au moins 2 et d'un cocatalyseur, le premier réacteur étant alimenté en éthylène, éventuellement en comonomère et/ou en hydrogène, en solide catalytique et en cocatalyseur, le milieu réactionnel du premier réacteur étant transféré dans le deuxième réacteur, et le deuxième réacteur étant en outre alimenté en éthylène et éventuellement en comonomère. De préférence, on introduit de l'hydrogène dans au moins un des deux réacteurs.

Le solide catalytique utilisé dans le premier procédé selon l'invention comprend avantageusement de 0,5 à 10 % en poids de titane (de préférence de 1 à 6 % en poids), de 5 à 40 % en poids de zirconium (de préférence de 10 à 25 % en poids), le rapport molaire Zr/Ti étant d'au moins 2, de 20 à 80 % en poids d'halogène (de préférence de 40 à 60 % en poids), de 1 à 30 % en poids de magnésium (de préférence de 5 à 15 % en poids), et de 0,5 à 10 % en poids d'aluminium (de préférence de 1 à 3 % en poids). Le solde est constitué de groupements organiques résiduels provenant des réactifs mis en oeuvre, en particulier des groupements alkoxy et alkyle. L'halogène est de préférence le chlore.

Le rapport Zr/Ti dans le solide catalytique est de préférence d'au moins 2,5, les valeurs d'au moins 3 étant particulièrement préférées. Le rapport Zr/Ti ne dépasse pas le plus souvent 10, plus précisément pas 8, les valeurs d'au plus 6 étant préférées.

Dans un deuxième procédé de préparation de polymère d'éthylène selon l'invention on met en oeuvre un mélange de deux solides catalytiques, le premier contenant un seul élément actif, à savoir le titane, et le deuxième contenant deux éléments actifs, à savoir le titane et le zirconium, dans une polymérisation en deux réacteurs en série, et un cocatalyseur, le premier réacteur étant alimenté en éthylène, éventuellement en comonomère et/ou en hydrogène, en premier et second solides catalytiques et en cocatalyseur, le milieu réactionnel du premier réacteur étant transféré dans le deuxième réacteur, et le deuxième réacteur étant en outre alimenté en éthylène et éventuellement en comonomère et/ou en hydrogène.

Le deuxième procédé de préparation des polymères d'éthylène conforme à l'invention consiste plus particulièrement à polymériser l'éthylène éventuellement avec un ou plusieurs comonomères dans deux réacteurs en série, en présence d'un premier solide catalytique constitué essentiellement de 10 à 30 % en poids de titane, de 20 à 60 % en poids d'halogène, de 0,5 à 20 % en poids de magnésium et de 0,1 à 10 % en poids d'aluminium, d'un second solide catalytique constitué essentiellement de 0,5 à 10 % en poids de titane, de 5 à 40 % en poids de zirconium, de 20 à 80 % en poids d'halogène, de 1 à 30 % en poids de magnésium et de 0,5 à 10 % en poids d'aluminium. De préférence, on introduit de l'hydrogène dans au moins un des deux réacteurs.

Les deux solides catalytiques peuvent éventuellement être mélangés préalablement à la mise en oeuvre dans le procédé de polymérisation. Le mélange préalable s'effectue alors avantageusement à température ambiante.

De préférence, le premier solide catalytique est constitué essentiellement de 15 à 20 % en poids de titane, de 30 à 50 % en poids d'halogène, de 1 à 10 % de magnésium et de 0,5 à 5 % en poids d'aluminium. Le solde est constitué de groupements organiques résiduels provenant des réactifs mis en oeuvre, en particulier des groupements alkoxy et alkyle. L'halogène est habituellement le chlore.

Le plus souvent, le second solide catalytique est constitué essentiellement de 1 à 6 % en poids de titane, de 10 à 25 % en poids de zirconium, de 40 à 60 % en poids d'halogène, de 5 à 15 % en poids de magnésium et de 1 à 3 % en poids d'aluminium. Le solde est constitué de groupements organiques résiduels provenant des réactifs mis en oeuvre, en particulier des groupements alkoxy et alkyle. Dans la plupart des cas, l'halogène est le chlore.

Dans le deuxième procédé selon l'invention les deux solides catalytiques sont en général mis en oeuvre en des quantités telles que le rapport molaire de titane provenant du premier solide catalytique au titane provenant du second solide catalytique soit d'au moins 1, en particulier d'au moins 1,25, les valeurs d'au moins 1,50 étant préférées. Le rapport est habituellement d'au plus 10, plus spécifiquement d'au plus 5, les valeurs d'au plus 4 étant préférées.

Le cocatalyseur mis en oeuvre dans le premier ou dans le deuxième procédé peut être tout cocatalyseur connu de la technique, notamment les composés organoaluminiques. On peut citer à titre d'exemples les trialkylaluminiums, en particulier ceux dont le groupement alkyle comporte jusqu'à 20 atomes de carbone (de préférence de 2 à 8 atomes de carbone), tels que le triéthylaluminium et le triisobutylaluminium. Le triéthylaluminium est préféré.

Selon un mode de réalisation particulier le ou les solides catalytiques mis en oeuvre dans le premier et le deuxième procédés de préparation de polymères d'éthylène selon l'invention sont préparés en faisant réagir, dans une première étape, un composé oxygéné organique de magnésium avec un composé oxygéné organique de titane, et avec, le cas échéant, un composé oxygéné organique de zirconium jusqu'à l'obtention d'un complexe liquide, et en traitant ledit complexe liquide, dans une deuxième étape, au moyen d'un composé organoaluminique halogéné de formule générale $AlR_nX_{3-n}$ dans laquelle R est un radical hydrocarboné, X est un halogène et n est inférieur à 3, pour précipiter le complexe liquide en un solide catalytique.

Aux fins de la présente invention on entend désigner par "composé oxygéné organique de magnésium", les composés comprenant au moins une séquence de liaisons magnésium-oxygène-radical organique par atome de magnésium. Le radical organique comprend en général jusqu'à 20 atomes de carbone et, plus particulièrement jusqu'à 10 atomes de carbone, de préférence de 2 à 6 atomes de carbone. Le radical organique peut être choisi parmi les radicaux alkyles (linéaires ou branchés), alkényles, aryles, cycloalkyles, arylalkyles, alkylaryles, acyles et leurs dérivés substitués. Les meilleurs résultats sont obtenus avec les alkoxydes de magnésium. Les dialkoxydes de magnésium sont préférés, en particulier le diéthylate de magnésium.

Par "composé oxygéné organique de titane ou de zirconium" on entend désigner les composés comprenant au moins une séquence de liaisons titane (ou zirconium)-oxygène-radical organique par atome de titane ou de zirconium. Le radical organique est conforme à ceux définis ci-dessus pour les composés oxygénés organiques de magnésium. On utilise de préférence les composés de titane ou de zirconium tétravalents. Parmi les composés oxygénés organiques de titane ou de zirconium, on peut citer les alkoxydes, les phénoxydes, les oxyalkoxydes, les alkoxydes condensés, les carboxylates et les énolates. Les meilleurs résultats sont obtenus avec les alkoxydes. Les préférés sont les tétraalkoxydes du titane ou du zirconium, en particulier le tétrabutylate de titane ou de zirconium.

La première étape de préparation du ou des solides catalytiques consiste à préparer un complexe liquide par réaction du composé oxygéné organique de magnésium avec le composé oxygéné organique de titane et, lorsque le solide catalytique comprend également du zirconium, avec le composé oxygéné organique de zirconium. On peut opérer la réaction en présence d'un diluant. Le diluant est généralement choisi parmi les alcanes linéaires ou ramifiés ou les cycloalcanes contenant jusqu'à 20 atomes de carbone. L'hexane convient bien.

La quantité mise en oeuvre du composé oxygéné organique de titane est en général d'au moins 0,01 mole de titane par mole de magnésium mise en oeuvre, en particulier d'au moins 0,02 mole, les valeurs d'au moins 0,05 mole étant préférées. La quantité est habituellement d'au plus 20 moles de titane par mole de magnésium mise en oeuvre, plus précisément d'au plus 10 moles, les valeurs d'au plus 5 moles étant préférées. La quantité mise en oeuvre du composé oxygéné organique de zirconium dépend alors du rapport molaire Zr/Ti souhaité.

La deuxième étape de préparation du ou des solides catalytiques, que l'on appelle l'étape de précipitation, a pour fonction de réduire la valence du métal de transition et simultanément d'halogéner le composé oxygéné organique de magnésium, le composé oxygéné organique de titane et, le cas échéant, le composé oxygéné organique de zirconium, c'est-à-dire de substituer les groupements alkoxy présents dans ces composés par des halogènes, de sorte que le complexe liquide obtenu à l'issue de la première étape soit précipité en un solide catalytique. La réduction et l'halogénation sont réalisées simultanément au moyen du composé organoaluminique halogéné agissant comme un agent réducto-halogénant provoquant la précipitation d'un solide catalytique.

Le traitement au moyen du composé organoaluminique halogéné dans l'étape de précipitation est effectué par mise en contact du complexe liquide issu de la première étape avec le composé organoaluminique halogéné, et de préférence en ajoutant progressivement le composé organoaluminique halogéné au complexe liquide.

Le composé organoaluminique halogéné répond avantageusement à la formule $AlR_nX_{3-n}$ dans laquelle R est un radical hydrocarboné comprenant jusqu'à 20 atomes de carbone et de préférence jusqu'à 6 atomes de carbone. Les meilleurs résultats sont obtenus lorsque R représente un radical alkyle linéaire ou branché. X est généralement du chlore. De préférence n ne dépasse pas 1,5, plus spécialement pas 1. On préfère le dichlorure d'éthylaluminium ou le dichlorure d'isobutylaluminium.

La quantité de composé organoaluminique halogéné à mettre en oeuvre est en général d'au moins 0,5 mole d'aluminium par mole mise en oeuvre de titane et de zirconium, de préférence d'au moins 1 mole, les valeurs d'au moins 2 moles étant les plus courantes; elle est couramment d'au plus 50 moles d'aluminium par mole mise en oeuvre de titane et de zirconium, en particulier d'au plus 30 moles, les valeurs d'au plus 20 moles étant avantageuses.

A l'issue de l'étape de précipitation du complexe liquide au moyen du composé organoaluminique halogéné, on recueille un solide catalytique constitué d'un précipité homogène (les constituants étant coprécipités à partir d'un complexe liquide) d'un mélange essentiellement amorphe d'un halogénure de magnésium, d'un halogénure de titane et, le cas échéant, d'un halogénure de zirconium et éventuellement de composés partiellement réduits et/ou partiellement halogénés. Il s'agit de complexes chimiquement liés, produits de réactions chimiques, et non pas du résultat de mélanges ou de phénomènes d'adsorption. En effet, il est impossible de dissocier l'un ou l'autre des constituants de ces complexes en utilisant des méthodes de séparation purement physiques.

Le solide catalytique comprenant du titane et du zirconium obtenu selon le mode de préparation particulier décrit ci-dessus permet aussi, lorsqu'il est utilisé dans un procédé de polymérisation d'oléfines dans deux réacteurs en série, d'obtenir des polyoléfines autres que les polymères d'éthylène conformes à l'invention. L'invention concerne dès lors également un procédé de polymérisation d'oléfines, selon lequel on polymérise l'oléfine éventuellement avec un ou plusieurs comonomères dans deux réacteurs en série, en présence d'un solide catalytique comprenant du titane et du zirconium dans un rapport molaire Zr/Ti d'au moins 2 et d'un cocatalyseur, le premier réacteur étant alimenté en oléfine et éventuellement en comonomère et/ou en hydrogène, en solide catalytique et en cocatalyseur, le milieu réactionnel du premier réacteur étant transféré dans le deuxième réacteur, et le deuxième réacteur étant en outre alimenté en oléfine et éventuellement en comonomère et/ou en hydrogène. Le solide catalytique est préparé en faisant réagir, dans une première étape, un composé oxygéné organique de magnésium avec un composé oxygéné organique de titane et avec un composé oxygéné organique de zirconium jusqu'à l'obtention d'un complexe liquide, et en traitant ledit complexe liquide, dans une deuxième étape, au moyen d'un composé organoaluminique halogéné de formule générale $AlR_nX_{3-n}$ dans laquelle R est un radical hydrocarboné, X est un halogène et n est inférieur à 3 pour précipiter le complexe liquide en un complexe catalytique solide. Le procédé permet d'obtenir, avec une productivité élevée, des polymères particulièrement homogènes.

L'oléfine peut être choisie parmi les oléfines contenant de 2 à 20 atomes de carbone, et de préférence de 2 à 6 atomes de carbone, telles que l'éthylène, le propylène, le butène-1, le 4-méthylpentène-1 et l'hexène-1. L'éthylène, le butène-1 et l'hexène-1 conviennent bien. L'éthylène est particulièrement préféré. Le comonomère peut être choisi parmi les oléfines citées ci-dessus et parmi les dioléfines comprenant de 4 à 20 atomes de carbone. Il va de soi que le comonomère introduit au deuxième réacteur peut être différent de celui qui est introduit au premier réacteur.

Le mélange des deux solides catalytiques utilisés dans le deuxième procédé de préparation d'un polymère d'éthylène conforme à l'invention, peut aussi être utilisé dans d'autres procédés de polymérisation d'oléfines dans un seul réacteur ou dans deux réacteurs disposés en série. L'invention porte alors aussi sur un système catalytique pour la polymérisation d'oléfines comprenant :

   (a) un premier solide catalytique consistant essentiellement de 10 à 30 % en poids de titane, de 20 à 60 % en poids d'halogène, de 0,5 à 20 % en poids de magnésium et de 0,1 à 10 % en poids d'aluminium,

   (b) un second solide catalytique consistant essentiellement de 0,5 à 10 % en poids de titane, de 5 à 40 % en poids de zirconium, de 20 à 80 % en poids d'halogène, de 1 à 30 % en poids de magnésium et de 0,5 à 10 % en poids d'aluminium, et

   (c) un cocatalyseur.

L'utilisation d'un mélange de deux solides catalytiques permet de modifier très rapidement les propriétés du polymère obtenu en ajustant la composition dudit mélange.

Les procédés de polymérisation de l'invention peuvent être effectués selon tout procédé connu, en solution dans un solvant qui peut être l'oléfine elle-même à l'état liquide, ou en suspension dans un diluant hydrocarboné, ou encore en phase gazeuse. On obtient de bons résultats dans les polymérisations en suspension.

Le principe d'une polymérisation dans deux réacteurs disposés en série est celui décrit dans la demande de brevet EP 603935 (SOLVAY). L'installation peut évidemment comprendre plus de deux réacteurs connectés en série. Les procédés de polymérisation en deux réacteurs en série sont avantageusement réalisés de manière à utiliser dans le deuxième réacteur des conditions de polymérisation (température, concentration en agent de transfert tel que l'hydrogène, concentration en comonomère éventuel, concentration en cocatalyseur éventuel,...) différentes de celles mises en oeuvre dans le premier réacteur. Ainsi, le polymère produit dans le deuxième réacteur présente un indice de fluidité différent de celui produit dans le premier réacteur. On peut donc faire en sorte que l'indice de fluidité obtenu dans le premier réacteur soit plus faible que celui obtenu dans le deuxième réacteur. En variante, on peut obtenir un indice de fluidité plus élevé dans le premier réacteur que celui obtenu dans le deuxième réacteur.

Les exemples qui suivent sont destinés à illustrer l'invention. La signification des symboles utilisés dans ces exemples, les unités exprimant les grandeurs mentionnées et les méthodes de mesure de ces grandeurs sont explicitées ci-dessous.

$MI_2$ =   indice de fluidité du polyéthylène mesuré à 190 °C sous une charge de 2,16 kg selon la norme ASTM D 1238 (condition E) (1986).

$MI_5$ =   indice de fluidité du polyéthylène mesuré à 190°C sous une charge de 5 kg selon la norme ASTM D 1238 (condition P)

MVS = masse volumique standard du polyéthylène exprimée en kg/m$^3$ et mesurée selon la nonne ISO 1183 (1987).

$\eta$ = viscosité dynamique du polyéthylène exprimée en dPa.s et mesurée à un gradient de vitesse de 100 s$^{-1}$ à 190°C.

ESCR = résistance à la fissuration sous contrainte exprimée en heure et mesurée par la méthode suivante : Dix plaques de dimensions 125 mm x 12,7 mm x 3,2 mm sont pressées à partir d'une feuille en polymère d'éthylène. Deux entailles y sont apportées, la première à 60 mm d'un bout de la plaque et la deuxième à 15 mm de l'autre bout de la plaque. Les plaques entaillées sont soumises à une force de flexion constante de 7,36 N, correspondant à une contrainte inférieure à la contrainte au seuil d'écoulement plastique, et immergées simultanément dans une solution tensio-active comprenant 3 ml de nonylphénoxy-poly(éthylèneoxy)éthanol par litre d'eau à la température de 60°C. Le temps à l'issue duquel les éprouvettes se rompent est relevé et le temps moyen correspondant à la rupture de 50 % des éprouvettes est calculé.

$T_G$ = taux de gonflement du polymère d'éthylène (sans unité). La méthode de mesure consiste à extruder, à 190°C et à un gradient de vitesse de 100 s$^{-1}$, le polymère d'éthylène au travers d'une filière d'une longueur de 30 mm et d'un diamètre de 2 mm et à une vitesse d'extrusion constante, et à mesurer le déplacement du piston nécessaire pour extruder une longueur de jonc de 70 mm. Le taux de gonflement est défini par la relation $T_G = 0,5707 \sqrt{e}$, dans laquelle e représente le déplacement du piston exprimé en mm. Le cylindre et le piston du rhéomètre utilisé pour cette mesure répondent aux critères de celui utilisé pour la mesure de l'indice de fluidité selon la norme ASTM D 1238 (1986).

P = productivité du solide catalytique exprimée en kg de polyéthylène produit par gramme de titane mis en oeuvre.

Exemple 1 (de référence)

Dans cet exemple on a préparé un polymère d'éthylène dans deux réacteurs en série à l'aide d'un catalyseur au titane selon le mode opératoire décrit dans la demande de brevet EP 603935 et on a mesuré son taux de gonflement et sa résistance à la fissuration sous contrainte.

A. Préparation du solide catalytique

On a fait réagir pendant 4 heures à 150°C du diéthylate de magnésium avec du tétrabutylate de titane en des quantités telles que le rapport molaire de titane au magnésium soit égal à 2. Ensuite, on a chloré et précipité le produit de réaction ainsi obtenu en mettant celui-ci en contact avec une solution de dichlorure d'éthylaluminium en une quantité telle que le rapport molaire d'aluminium au magnésium soit égal à 6,5, pendant 90 minutes à 45°C. Le solide ainsi obtenu comprenait 15,8 % en poids de Ti, 36,0 % en poids de Cl, 2,2 % en poids d'Al et 4,4 % en poids de Mg.

B. Polymérisation d'éthylène en deux réacteurs

On a polymérisé de l'éthylène dans une installation comprenant deux réacteurs disposés en série. On a introduit en continu dans le premier réacteur de l'hexane, du triéthylaluminium à titre de cocatalyseur, de l'éthylène et de l'hydrogène dans un rapport molaire hydrogène/éthylène de 0,27 et le solide catalytique obtenu en A. La température a été maintenue constante à une valeur 85 °C. Le milieu de polymérisation du premier réacteur a été retiré en continu du premier réacteur et transféré dans le deuxième réacteur, qui est en outre alimenté en éthylène, en hydrogène dans un rapport molaire hydrogène/éthylène de 0,0085 et en butène dans un rapport molaire butène/éthylène de 0,31. La température dans le deuxième réacteur était de 70°C. La productivité P était de 200. Le polymère obtenu présentait les caractéristiques suivantes :

MI$_5$ = 1,3
$\eta$ = 15400
$T_G$ = 1,34
ESCR = 128
MVS = 956.

Le polymère obtenu présente un taux de gonflement inférieur à 1,4 tandis que les polymères d'éthylène selon l'invention présentent un taux de gonflement d'au moins 1,4.

Exemple 2 (de référence)

Dans cet exemple on a préparé un polymère d'éthylène dans un seul réacteur à l'aide d'un catalyseur au titane et au zirconium selon le mode opératoire décrit dans le brevet belge BE 840378 et on a mesuré son taux de gonflement et sa résistance à la fissuration sous contrainte.

A. Préparation du solide catalytique

On a fait réagir pendant 4 heures à 150°C du diéthylate de magnésium avec du tétrabutylate de titane et avec du tétrabutyalte de zirconium en des quantités telles que le rapport molaire Ti/Mg soit égal à 0,6 et que le rapport molaire Zr/Ti soit égal à 1,2. Ensuite, on a chloré et précipité le produit de réaction ainsi obtenu en mettant celui-ci en contact avec une solution de dichlorure d'isobutylaluminium en une quantité telle que le rapport molaire Al/Mg soit de 11 à 45°C. On a mélangé le solide catalytique avec du tétraisopropylate de titane à raison de 150 g par kg de solide catalytique. Le solide ainsi obtenu comprenait 6,4 % en poids de Ti, 12,6 % en poids de Zr, 55,2 % en poids de Cl, 2,5 % en poids d'Al et 5,8 % en poids de Mg.

## B. Polymérisation d'éthylène en un seul réacteur

On a polymérisé de l'éthylène dans un seul réacteur. On y a introduit de l'hexane, du triisobutylaluminium à titre de cocatalyseur, de l'éthylène et de l'hydrogène dans un rapport molaire hydrogène/éthylène de 0,09 et le solide catalytique obtenu en A. On a introduit du butène dans un rapport molaire butène/éthylène de 0,07. La température a été maintenue constante à une valeur de 87 °C. La productivité P était de 100. Le polymère obtenu présentait les caractéristiques suivantes :

$MI_5$ = 1,1
$\eta$ = 18300
$T_G$ = 1,59
ESCR = =38
MVS = 954.

Le polymère obtenu présente une résistance à la fissuration sous contrainte inférieur à 55 h tandis que les polymères d'éthylène selon l'invention présentent une résistance à la fissuration sous contrainte d'au moins 55 h.

## Exemple 3 (conforme à l'invention)

Dans cet exemple on a fabriqué un polymère d'éthylène conforme à l'invention au moyen du premier procédé de préparation selon l'invention.

## A. Préparation du solide catalytique

On a fait réagir pendant 4 heures à 150°C du diéthylate de magnésium avec du tétrabutylate de titane et avec du tétrabutylate de zirconium en des quantités telles que le rapport molaire Ti/Mg soit égal à 0,4 et que le rapport molaire Zr/Ti soit égal à 3. Ensuite, on a chloré et précipité le produit de réaction ainsi obtenu en mettant celui-ci en contact à 45 °C avec une solution de dichlorure d'isobutylaluminium en une quantité telle que le rapport molaire Al/Mg soit de 8,4. Le solide ainsi obtenu comprenait 4,4 % en poids de Ti, 14,9 % en poids de Zr, 50,2 % en poids de Cl, 2,4 % en poids d'Al et 8,0 % en poids de Mg.

## B. Polymérisation d'éthylène en deux réacteurs

On a polymérisé de l'éthylène dans une installation comprenant deux réacteurs disposés en série. On a introduit en continu dans le premier réacteur de l'hexane, du triéthylaluminium à titre de cocatalyseur, de l'éthylène et de l'hydrogène dans un rapport molaire hydrogène/éthylène de 0,37 et le solide catalytique obtenu en A. La température a été maintenue constante à une valeur de 85 °C. Le milieu de polymérisation du premier réacteur a été retiré en continu du premier réacteur et transféré dans le deuxième réacteur, qui est en outre alimenté en éthylène, en hydrogène dans un rapport molaire hydrogène/éthylène de 0,0125 et en butène dans un rapport molaire butène/éthylène de 0,2. La température dans le deuxième réacteur était de 80°C. La productivité P était de 213. Le rapport pondéral du polymère obtenu dans le premier réacteur au polymère obtenu dans le deuxième réacteur était de 45,6/54,4. Le polymère obtenu présentait les caractéristiques suivantes :

$MI_5$ = 1,5
$\eta$ = 12800
$T_G$ = 1,49
ESCR = 143
MVS = 955.

## Exemple 4 (conforme à l'invention)

Dans cet exemple on a fabriqué un polymère d'éthylène conforme à l'invention au moyen du deuxième procédé de préparation selon l'invention.

## A. Préparation du mélange de solides catalytiques

### A.1. Préparation du premier solide catalytique au titane

On a fait réagir pendant 4 heures à 150°C du diéthylate de magnésium avec du tétrabutylate de titane en des quantités telles que le rapport molaire de titane au magnésium soit égal à 2. Ensuite, on a chloré et précipité le produit de réaction ainsi obtenu en mettant celui-ci en contact avec une solution de dichlorure d'éthylaluminium en une quantité telle que le rapport molaire Al/Mg soit de 6,5, pendant 90 minutes à 45°C. Le solide ainsi obtenu comprenait 15,8 % en poids de Ti, 36,0 % en poids de Cl, 2,2 % en poids d'Al et 4,4 % en poids de Mg.

### A.2. Préparation du second solide catalytique au titane et au zirconium

On a fait réagir pendant 4 heures à 150°C du diéthylate de magnésium avec du tétrabutylate de titane et avec du tétrabutyalte de zirconium en des quantités telles que le rapport molaire Ti/Mg soit égal à 0,6 et que le rapport molaire Zr/Ti soit égal à 2. Ensuite, on a chloré et précipité le produit de réaction ainsi obtenu en mettant celui-ci en contact avec une solution de dichlorure d'isobutylaluminium en une quantité telle que le rapport molaire Al/Mg soit de 14, d'abord à 45°C, puis à 60°C. Le solide ainsi obtenu comprenait 5,4 % en poids de Ti, 16,3 % en poids de Zr, 52,6 % en poids de Cl, 2,4 % en poids d'Al et 4,1 % en poids de Mg.

A.3. Préparation du mélange

On a mélangé le solide obtenu en A avec le solide obtenu en B à raison de telles quantités que le rapport molaire de titane provenant du premier solide catalytique au titane provenant du second solide catalytique soit de 1,5.

B. Polymérisation d'éthylène en deux réacteurs

On a polymérisé de l'éthylène dans une installation comprenant deux réacteurs disposés en série. On a introduit en continu dans le premier réacteur de l'hexane, du triéthylaluminium à titre de cocatalyseur, de l'éthylène et de l'hydrogène dans un rapport molaire hydrogène/éthylène de 0,32 et le mélange de solides catalytiques obtenu en A.3. La pression totale dans le réacteur et la température ont été maintenues constantes à une valeur de 3,2 MPa et 85 °C respectivement. Le milieu de polymérisation du premier réacteur a été retiré en continu du premier réacteur et transféré dans le deuxième réacteur, qui est en outre alimenté en éthylène, en hydrogène dans un rapport molaire hydrogène/éthylène de 0,0185 et en butène dans un rapport molaire butène/éthylène de 0,35. La pression totale dans le réacteur était de 3,0 MPa. La température dans le deuxième réacteur était de 75°C. La productivité P était de 111. Le polymère obtenu présentait les caractéristiques suivantes :

$MI_2$ = 0,32  
$\eta$ = 15300  
$T_G$ = 1,43  
ESCR = 109  
MVS = 956,4.

**Revendications**

1. Procédé de polymérisation d'oléfines selon lequel on polymérise l'oléfine éventuellement avec un ou plusieurs comonomères dans deux réacteurs en série, en présence d'un solide catalytique comprenant du titane et du zirconium dans un rapport molaire Zr/Ti d'au moins 2 et d'un cocatalyseur, le premier réacteur étant alimenté en oléfine et éventuellement en comonomère et/ou en hydrogène, en solide catalytique et en cocatalyseur, le milieu réactionnel du premier réacteur étant transféré dans le deuxième réacteur, et le deuxième réacteur étant en outre alimenté en oléfine et éventuellement en comonomère et/ou en hydrogène.

2. Procédé selon la revendication 1, **caractérisé en ce que** le rapport molaire Zr/Ti est d'au moins 2,5 et ne dépasse pas 10.

3. Procédé selon l'une quelconque des revendications 1 et 2, **caractérisé en ce que** le solide catalytique est constitué essentiellement de 0,5 à 10 % en poids de titane, de 5 à 40 % en poids de zirconium, de 20 à 80 % en poids d'halogène, de 1 à 30 % en poids de magnésium et de 0,5 à 10 % en poids d'aluminium.

4. Procédé selon l'une quelconque des revendications 1 à 3, dans lequel on utilise un solide catalytique qui est préparé en faisant réagir, dans une première étape, un composé oxygéné organique de magnésium avec un composé oxygéné organique de titane et avec un composé oxygéné organique de zirconium jusqu'à l'obtention d'un complexe liquide, et en traitant ledit complexe liquide, dans une deuxième étape, au moyen d'un composé organoaluminique halogéné de formule générale $AlR_nX_{3-n}$ dans laquelle R est radical hydrocarboné, X est un halogène et n est inférieur à 3, pour précipiter le complexe liquide en un complexe catalytique solide.

5. Procédé selon l'une quelconque des revendications 1 à 4, **caractérisé en ce que** le cocatalyseur est un composé organoalumique.

6. Procédé selon la revendication 5, **caractérisé en ce que** le composé organoalumique est un trialkylaluminium dont le groupement alkyle comporte jusqu'à 20 atomes de carbone.

7. Procédé selon l'une quelconque des revendications 1 à 6, **caractérisé en ce que** l'oléfine est de l'éthylène.

8. Procédé selon l'une quelconque des revendications 1 à 7, **caractérisé en ce que** le comonomère est choisi parmi les oléfines et les dioléfines comprenant de 4 à 20 atomes de carbone.

**Claims**

1. Process for polymerization of olefins according to which the olefin is optionally polymerized with one or more comonomers in two reactors arranged in series, in the presence of a solid catalyst comprising chromium on a support chosen from the binary sup-

ports SiO$_2$-AlPO$_4$, Al$_2$O$_3$-AlPO$_4$ and the ternary supports SiO$_2$-Al$_2$O$_3$-AlPO$_4$, and of a cocatalyst, the first reactor being fed with ethylene and optionally with comonomer and/or with hydrogen, and with solid catalyst, the reaction medium from the first reactor being transferred to the second reactor, the second reactor also being fed with ethylene and optionally with comonomer and/or with hydrogen, and the cocatalyst being present in at least one of the two reactors.

2. Process according to Claim 1, **characterized in that** the cocatalyst is used only in the second reactor.

3. Process according to Claim 1 or 2, **characterized in that** the cocatalyst is chosen from organoboron compounds.

4. Process according to Claim 3, **characterized in that** the organoboron compounds are chosen from trialkylboranes whose alkyl chains contain up to 20 carbon atoms.

5. Process according to any one of Claims 1 to 4, **characterized in that** the support comprises silica (X), alumina (Y) and aluminium phosphate (Z) in a molar percentage (X):(Y):(Z) of (10-95) : (1-80) : (1-85).

6. Process according to any one of Claims 1 to 5, **characterized in that** the support has a pore volume of at least 1.5 cm$^3$/g.

7. Process according to any one of Claims 1 to 6, **characterized in that** the olefin is ethylene.

8. Process according to any one of Claims 1 to 7, **characterized in that** the comonomer is chosen from olefins and diolefins containing from 4 to 20 carbon atoms.

**Patentansprüche**

1. Verfahren zur Polymerisation von Olefinen, gemäß dem man das Olefin gegebenenfalls mit einem oder mehreren Comonomeren in zwei in Reihe angeordneten Reaktoren in Gegenwart eines katalytischen Feststoffs, der Chrom auf einem unter den binären Trägern SiO$_2$ - AlPO$_4$, Al$_2$O$_3$ - AlPO$_4$ und den ternären Trägern SiO$_2$ - Al$_2$O$_3$ - AlPO$_4$ ausgewählten Träger umfasst, und eines Cokatalysators polymerisiert, wobei der erste Reaktor mit Ethylen und gegebenenfalls mit Comonomer und/oder mit Wasserstoff, mit katalytischem Feststoff gespeist wird, das Reaktionsmedium des ersten Reaktors in den zweiten Reaktor überführt wird, der zweite Reaktor außerdem mit Ethylen und gegebenenfalls mit Comonomer und/oder mit Wasserstoff gespeist wird und der Cokatalysator in wenigstens einem der beiden Reaktoren vorhanden ist.

2. Verfahren gemäß Anspruch 1, **dadurch gekennzeichnet, dass** der Cokatalysator nur in dem zweiten Reaktor eingesetzt wird.

3. Verfahren gemäß Anspruch 1 oder 2, **dadurch gekennzeichnet, dass** der Cokatalysator unter den bororganischen Verbindungen ausgewählt ist.

4. Verfahren gemäß Anspruch 3, **dadurch gekennzeichnet, dass** die bororganischen Verbindungen unter den Bortrialkylen ausgewählt sind, deren Alkylketten bis zu 20 Kohlenstoffatome umfassen.

5. Verfahren gemäß einem der Ansprüche 1 bis 4, **dadurch gekennzeichnet, dass** der Träger Siliciumdioxid (X), Aluminiumoxid (Y) und Aluminiumphosphat (Z) in einem Molprozentsatz (X) : (Y) : (Z) von (10 bis 95) : (1 bis 80) : (1 bis 85) enthält.

6. Verfahren gemäß einem der Ansprüche 1 bis 5, **dadurch gekennzeichnet, dass** der Träger ein Porenvolumen von wenigstens 1,5 cm$^3$/g aufweist.

7. Verfahren gemäß einem der Ansprüche 1 bis 6, **dadurch gekennzeichnet, dass** das Olefin Ethylen ist.

8. Verfahren gemäß einem der Ansprüche 1 bis 7, **dadurch gekennzeichnet, dass** das Comonomer unter den Olefinen und den Diolefinen mit 4 bis 20 Kohlenstoffatomen ausgewählt ist.